# EUROPÄISCHE PATENTANMELDUNG

(11) **EP 1 762 692 A2**
(43) Veröffentlichungstag der Anmeldung: **14.03.2007**
(21) Anmeldenummer: 06117964.4
(22) Anmeldetag: 27.07.2006
(51) Int. Cl.: E06B 9/00, E06B 1/30

(54) **Blendrahmen**

(30) Priorität: 02.08.2005 DE 202005012111 U
(71) Anmelder: PARAT Automotive Schönenbach GmbH + Co. KG, 42897 Remscheid (DE)
(72) Erfinder: Schönenbach, Heinz, 42897 Remscheid (DE)
(74) Vertreter: Kinnstätter, Klaus

(57) **Zusammenfassung**

Die Erfindung betrifft einen Blendrahmen für Fenster, Luken oder Türen mit Lichtdurchdringungsflächen, die rahmenlos oder mit einem Rahmen versehen an dem Blendrahmen angelenkt sind und über die Lichtdurchdringungsfläche verbringbare Abschattungsmittel aufweisen. Der Blendrahmen besteht aus einem ersten Rahmenteil, der den Durchbruch in der Wand umrahmt oder in diesen eingesetzt ist und aus einem zweiten Rahmenteil, der mit dem ersten verbindbar ist. In einem der Rahmenteile befindet sich an der dem anderen Rahmenteil zugewandten Seite in einem Rahmenholm eine Austrittsöffnung und eine Lagerkammer mit seitlichen Lagereinrichtungen zur Aufnahme eines vorziehbaren Abschattungsmittels, das in Längsführungen geführt ist.

## Beschreibung

Die Erfindung betrifft einen Blendrahmen für Fenster, Luken oder Türen mit den im Oberbegriff des Anspruches 1 angegebenen Merkmalen.

Es sind Dachfenster, Fenster in Wohnwagen, Automobilen, insbesondere in den Fahrgasträumen, in Schiffswänden und in Gebäuden bekannt, die einen Blendrahmen aufweisen, der in der Wand fest montiert ist. An einem solchen Blendrahmen befinden sich Schwenkbeschläge für ein rahmenloses oder ein umrahmtes Fenster. Zur Abschattung ist es bei derartigen Fenstern bekannt, Falt- oder ausziehbare Rollos an den oberen Querteilen der Blendrahmen zu befestigen und diese seitlich geführt oder ungeführt nach unten zu ziehen. Darüber hinaus ist es bekannt, außenseitig Jalousien oder Rollladen vorzusehen, die an dem Rahmen befestigt sind und ebenfalls ausgezogen oder zusammengeschoben oder zusammengezogen werden können. Solche Jalousien können auch innenseitig an dem Fenster vorgesehen sein, wenn das Fenster an der Innenseite des Blendrahmens angeschlagen ist. Die Abschattungsmittel sind also sowohl außenseitig als auch innenseitig bei entsprechender konstruktiver Ausgestaltung anbringbar. Befinden sie sich an der Innenseite und lässt sich das Fenster nach innen öffnen, so sind die Abschattungsmittel an der Innenseite des Fensters angebracht, und zwar an dem Rahmen des Fensters.

Bei allen bekannten Ausführungen werden die Abschattungsmittel entweder an den Blendrahmen oder an den Rahmen der Fenster nachträglich befestigt oder Einsetzrahmen aufgesetzt, in denen die Abschattungsmittel vormontiert sind. Im Falle der Verwendung von Außenjalousien und Rollladen aus Kunststoff, Holz oder Leichtmetall ist es darüber hinaus bekannt, in dem Blendrahmen obenseitig oder oberhalb einen Rollladenkasten vorzusehen, in dem der Rollladen gelagert ist und über seitlich herausgeführte Zugbänder abgelassen und wieder aufgerollt werden kann. Der Rollladen ist seitlich in U-förmigen Schienen gelagert, die bis zur Oberseite des unteren Querholms des Rahmens reichen.

Die bekannten Lösungen sind für kleinere Fenster nur bedingt einsetzbar, da sie auf Grund des größeren Raumbedarfes dazu führen, dass die Sichtfläche des Fensters verkleinert wird. Des Weiteren hat sich gezeigt, dass die nachträgliche Anbringung zu Beschädigungen der Oberfläche der Seitenholme des Blendrahmens oder des Fensterrahmens führen kann.

Aus der DE 84 31 757 U1 ist ein Fenster für Gebäude, mit einem eine Fensteröffnung begrenzenden, in eine Wandöffnung einsetzbaren, Blendrahmen bekannt, der mit mindestens einer festen, in der Fensteröffnung vorgesehenen Glasscheibe oder mit mindestens einem beweglichen Fensterflügel ausgefüllt ist. Der Blendrahmen ist in einer ihn umgebenden Blockzarge lösbar befestigt, die sowohl Wandbefestigungselemente als auch Befestigungselemente zum Anbringen des Blendrahmens aufweist. Am oberen Ende der Blockzarge ist über einem, hinter der Fensteröffnung befindlichen, Fensterraum ein Kasten angeordnet, der einen ersten Hilfsraum umschließt, in dem mindestens eine Rolle für Vorhangbahnen enthalten ist. Die Vorhangbahnen sind breiter als der Blendrahmen und sind in den Fensterraum hinein abwickelbar. Der Kasten weist an seiner Unterseite eine Zwischenwand mit Schlitzen für den Durchtritt der Vorhänge und mit Führungselementen zum Spreizen der einzelnen Vorhangbahnen auf. Die Konstruktion ist sehr aufwändig und besteht aus einer Vielzahl von Baueinheiten, die keinen unmittelbaren Verbund bilden.

Aus der DE 34 27 899 C2 ist ein Sonnenschutz für Fenster oder Türen, insbesondere für Dachfenster, bekannt, welcher aus einer flexiblen Bahn und aus einer, diese Bahn an der Außenseite des Fenster-Flügelrahmens befestigbaren Halterung besteht. Der Sonnenschutz kann nachträglich am Fensterrahmen befestigt werden.

Ausgehend von dem dargestellten Stand der Technik liegt der Erfindung die Aufgabe zu Grunde, einen Blendrahmen so auszubilden, dass eine Abschattung nicht zu einer Verkleinerung der Lichtdurchdringungsfläche des Fensters, der Luke oder der mit einer Scheibe versehenen Tür führt und keine Aufsätze sichtbar sind. Des weiteren soll ein einfacher Einbau des Blendrahmens an einer Wand bzw. in einen Fensterdurchbruch in einer Wand ermöglicht werden.

Die Aufgabe löst die Erfindung durch die Ausgestaltung eines Blendrahmens gemäß der im Anspruch 1 angegebenen technischen Lehre.

Vorteilhafte Ausgestaltungsformen und Weiterbildungen des Erfindungsgegenstandes sind in den Unteransprüchen im Einzelnen angegeben.

Gemäß der Lehre der Erfindung ist der Blendrahmen aus zwei Rahmenteilen zusammengesetzt, die gewissermaßen aufeinandergelegt werden. Einer der Rahmenteile umrahmt den Durchbruch in einer Wand. Mit diesem Rahmenteil ist der zweite Rahmenteil verbindbar. Im Sinne der Erfindung ist dabei unter verbindbar zu verstehen: eine feste planparallele Verbindung mittels Verklippen oder Verschrauben oder eine schwenkbewegliche Verbindung des einen Teils am anderen, wobei der Anschlag links, rechts, oben oder unten vorgesehen sein kann, je nach konstruktiver Ausführung. Die Rahmenteile sind auch in ihrer Zuordnung austauschbar, so dass der zweite Rahmenteil am ersten oder bei kinematischer Umkehr auch der erste Rahmenteil am zweiten, je nachdem welcher an der Wand befestigt ist, schwenkbeweglich um eine Schwenkachse angelenkt oder befestigt sein kann. Auch kann das Fenster, die Luke oder die Tür nach innen oder nach außen zu öffnen ausgebildet sein.

Bei Fenstern für Wohnwagen ist es üblich, die Schwenkachse oben am oberen Rahmenholm horizontal verlaufend vorzusehen, so dass der zweite Rahmenteil gegenüber dem ersten z. B. nach außen aufstellbar ist, so dass bei Regen Regenwasser nicht durch das geöffnete Fenster in den Innenraum des Wohnwagens dringen kann. Die Rahmenteile nach der Erfindung können aber auch stationäre Rahmenteile sein, also fest in die Wand eingebaut sein, wobei ein Rahmenteil an der Wand festgeschraubt ist und der zweite Rahmenteil daran befestigt wird. Dies kann, wenn die Teile aus Kunststoff bestehen, mittels angespritzter Rastverbinder erfolgen oder aber durch Anschrauben. Dabei erfolgt die Verbindung von der Innenseite des Raumes her, z. B. eines Wohnwagens, mit dem von außen eingesetzten und zuvor fest an der Wand angeschraubten Rahmenteil. Der äußere Rahmenteil kann auch Lagerungen für einen Fensterrahmen oder ein im Wesentlichen rahmenloses Fenster aufweisen. Dieses ist außenseitig angebracht und nach oben aufstellbar. Die Erfindung ist darüber hinaus aber auch dann anwendbar, wenn ein nach innen zu öffnendes Fenster vorgesehen ist. Dies kann beispielsweise auch der zweite Rahmenteil selbst sein, der am ersten angelenkt ist und eine Scheibe aufweist. Die Erfindung ist also auf alle möglichen Fenster-, Luken- und Türausführungen anwendbar, wobei die Beschreibung der Fensterausführung auf Luken und Türen übertragbar ist.

Mindestens in einem der beiden Rahmenteile ist an der dem anderen Rahmenteil zugewandten Seite, in mindestens einem der Rahmenholme, mindestens über die gesamte Breite oder Höhe der Rahmenöffnung verlaufend, eine Austrittsöffnung für ein Abschattungsmittel vorgesehen, das in einer Lagerkammer mit seitlichen Lagereinrichtungen zur Aufnahme und Lagerung eines ausziehbaren Abschattungsmittels oder zur Aufnahme eines einsetzbaren Lagerteils mit eingesetzten Abschattungsmitteln und den hierfür vorgesehenen Antriebsmitteln versehen ist. Unter dem Begriff "Abschattungsmittel" werden hier Stoff-, Kunststoff-, Textilgeflechtbahnen und Gaze verstanden, die in bekannten Ausführungen bei Rollos, Raff- und Faltrollos zur Anwendung kommen, um einen Sichtschutz und/oder Insektenschutz zu gewährleisten. Die Abschattungsmittel können dabei lichtundurchlässig oder auch lichtdurchlässig ausgeführt sein. Im Falle der Verwendung von Gaze tritt beispielsweise Licht durch, während beim Verbringen derselben vor die Rahmenöffnung keine Insekten in den Innenraum eindringen können. Die Lagerkammer kann, je nach gewünschter Verschieberichtung der Abschattungsmittel, entweder obenseitig im Querholm des Rahmenteils oder aber auch in den seitlichen oder in dem unteren Rahmenholm eingearbeitet sein, so dass in gewünschter Weise durch Vorziehen des Abschattungsmittels, entweder von oben nach unten oder von links nach rechts oder von rechts nach links bzw. von unten nach oben, die gewünschte Verdeckung der Rahmenöffnung mit dem Abschattungsmittel erfolgt. Die Lagerkammer selbst kann an den Körper des Abschattungsmittel formangepasst ausgeführt sein oder aber auch als stufenförmige Ausnehmung, die nach dem Einbau des Abschattungsmittels von Verkleidungselementen in gewünschter Weise verschlossen wird. Es empfiehlt sich in diesem Fall, diese Abstufung umlaufend vorzusehen und mindestens den oberen und unteren Rahmenholmen bei Fenstern, die von oben und/oder von unten mit Abschattungsmitteln verschlossen werden sollen, größer auszubilden, während in den Seitenholmen Längsführungen als kleinere abgestufte Ausnehmungen eingebracht sind. In diese Abstufungen können auch am zweiten Rahmen bzw. am ersten, je nach Einbringung, vorstehende Längsrippen eingreifen, die die Längskanäle bilden und die Lagerkammern begrenzen und auch die Austrittsöffnungen bilden, durch die die entsprechenden Abschattungsmittel aus der oder den Lagerkammern hervorgezogen werden können. Es ist auch möglich, in die so abgestuften Anordnungen einen Einsatz einzusetzen, der die Lagereinrichtungen zur Aufnahme und Lagerung des ausziehbaren Abschattungsmittels aufweist. Dieser Rahmen und auch das Abschattungsmittel in der Lagerkammer können von einer Abdeckung im montierten Zustand abgedeckt sein, so dass wiederum ein in sich geschlossener, autark handhabbarer Rahmenteil entsteht, der mit dem anderen Rahmenteil in gewünschter Weise in der Einbaumontage verbindbar ist.

Wenn die Abschattungsmittel Rolloeinrichtungen sind, die eine Rollobahn und eine Wickelrolle aufweisen, so muss die Lagerkammer so dimensioniert sein, dass das Rollo mit dem maximalen Durchmesser der Wickelrolle mit der aufgewickelten Rollobahn platziert werden kann. Im Falle der Verwendung eines Faltrollos, das mit einem Ende am Rahmenholm fixiert und mit dem anderen Ende über seitliche Halteelemente an dem Seilzug vorziehbar befestigt ist, braucht die Kammerhöhe nur der Falthöhe zu entsprechen. Bei Verwendung von Rollos mit einer Wickelrolle kann diese Wickelrolle gegen die Kraft einer Federanordnung ausziehbar sein, so dass die Feder sich spannt und eine automatische Rückführung in bekannter Weise bewirkt. Auf die Feder kann aber auch verzichtet werden, wenn ein Endlosseilzug mit Umlenkrollenführung als Antrieb zum Einsatz kommt, der über eine Antriebsrolle auf die Wickelrolle in beiden Drehrichtungen wirkt, da über die vom Seil umschlungene Antriebsrolle sowohl ein Abrollen als auch ein Aufrollen der Rollobahn möglich ist. Antriebsrollen können dabei auf beiden Seiten vorgesehen sein oder nur an einer Seite der Wickelrolle. Dem Fachmann bieten sich hier diverse konstruktive Ausführungsmöglichkeiten.

In einem Rahmenteil können aber auch unterschiedliche Abschattungsmittel zum Einsatz kommen. So ist es beispielsweise möglich, sowohl im oberen als auch im unteren Rahmenholm oder im rechten und im linken Falt- oder Aufwickelrollos unterzubringen, die überlappend vorziehbar und rückführbar sind. Das eine Rollo kann z.B. ein Verdunkelungsrollo sein, das andere eine Gaze für den Schutz gegen Insekten. Beide Abschattungsmittel können unabhängig voneinander bewegt werden. Es ist auch bei besonders flachen Rahmenteilen möglich, an beiden Seiten Abschattungsmittel vorzusehen, die beispielsweise nur bis in die Mitte der Rahmenöffnung herausgezogen werden können oder auch um ein Drittel oder zwei Drittel, um beispielsweise unterschiedliche Abschattungseffekte zu erreichen, z.B. im oberen Drittel einen Schutz gegen Sonneneinstrahlung und im unteren Abschnitt über zwei Drittel einen Insektenschutz. Die Anordnungen, die oben und unten in einem Rahmenteil vorgesehen sein können, können auch seitlich eingebracht werden, wenn es gewünscht ist, dass die Abschattungsmittel von der Seite her über die Rahmenöffnung gezogen werden. In jedem Fall sind Längsführungen mindestens für seitliche Halteelemente an dem Auszugsanfang der Abschattungsmittel vorzusehen, damit diese seitlich geführt sind und nicht verkanten.

Verwendbare Seilantriebe mit Endlosseilzug sind beispielsweise aus der DE 101 23 423 A1 für Antriebe für Schließelemente in einem Fahrzeugdach bekannt. Des Weiteren sind solche Antriebe bei Jalousien bekannt, die nachträglich an Fenstern angebaut werden. Aus der
EP 1 279 537 A2 ist eine solche Anordnung bei einer Dachfensterkonstruktion ebenfalls bekannt. Antriebe, die mit einer Rolloeinrichtung zusammenwirken, bei der eine Feder beim Ausziehen der Rollobahn gespannt wird, und Dämpfungsmittel aufweisen, sind aus der DE 20 2005 000 363 U1 bekannt. Alle solchen Seilzugeinrichtungen können zur Bedienung der Abschattungsmittel in einen Blendrahmen nach der Erfindung eingesetzt werden.
Als besonders vorteilhaft hat es sich erwiesen, wenn ein Endlosseilzug zur Anwendung kommt, der über Umlenkrollen in den Längsführungen und Führungskanälen so umgeleitet wird, dass mittels eines einzigen Bedienorgans das Rollo bedient werden kann. Anstelle eines Rollos kann selbstverständlich auch ein Rollladen, der aus Kunststoffstreifen oder aus anderen Materialstreifen besteht, die miteinander gelenkig verbunden sind, zum Einsatz kommen. Der Endlosseilzug wird dabei um die Antriebsrollen und über Umlenkrollen an der Seite gelegt, an der sich das Rollo befindet, gleich ob es sich um ein aufwickelbares oder faltbares Rollo handelt. Die Halteelemente an dem Auszugsanfang sind mit dem Seilzug verbunden, so dass beim Bewegen des Seilzugs in die eine Richtung die Rollobahn ausgefahren und bei Bewegung in die andere Richtung zurückgefahren wird. Der Seilzug kann dabei in den Längsführungen oder in Führungskanälen, die hierzu parallel oder integriert vorgesehen sind, geführt sein. Die Umlenkrollen sind so anzubringen und miteinander zu verknüpfen, dass in gewünschter Weise die aktiven beidseitig z.B. in den seitlichen Rahmenholmen geführten Seilzugstränge in gleicher Richtung sich bewegen. Betätigt werden kann ein solcher Seilzug dann über ein einziges Betätigungsorgan, das durch einen Führungsschlitz aus dem Rahmenteil vorsteht. Dieses Betätigungsorgan ist über Mitnehmer fest mit dem Seilzug verbunden. Bei seitlicher Anordnung des Betätigungsorgans in oder an einem Längsholm kann durch Herauf- und Herunterschieben desselben das Abschattungsmittel ebenfalls vor die Rahmenöffnung verbracht werden, bei Anordnung beispielsweise in dem unteren Querholm durch seitliches Verschieben. Darüber hinaus können Übersetzungsmittel vorgesehen sein, die z. B. durch eine entsprechende Anpassung der Durchmesser der Umlenkrollen an die der Antriebsrollen der Rolloeinrichtung realisiert sein können, um zu erreichen, dass bei Ausübung eines relativ kurzen Schiebeweges des Bedienorgans das Abschattungsmittel voll ausgefahren oder zurückgefahren wird.
Im Falle der Anbringung von Abschattungsmitteln, die gegenläufig angeordnet sind, versteht es sich von selbst, dass es zweckmäßig ist, zwei gesonderte Seilzugantriebe vorzusehen. In diesem Fall sind auch zwei Betätigungsorgane gesondert vorzusehen, die in einem gemeinsamen Führungsschlitz in dem Rahmenteil oder in getrennt angeordneten Schlitzen gelagert sind. Durch die Abdeckung oder die Führung des Seilzuges in Führungskanälen ist sichergestellt, dass von außen eine Manipulation nicht möglich ist. Das Rahmenteil, das die Abschattungsmittel enthält und beispielsweise Bestandteil eines Fensters für Wohnwagen ist, kann an der Innenseite des Wohnwagens angebracht und an der Wand befestigt sein. An das Teil ist von außen der erste Rahmenteil anklippbar. Soll eine Demontage nur vom Innenraum her möglich sein, so ist der erste Rahmenteil von außen auf den Rand des Fensterdurchbruchs aufzusetzen und an der Wand festzuschrauben und der zweite Rahmenteil mit den Abschattungsmitteln damit zu verbinden. Wenn der zweite innere Rahmenteil fest an der Wand montiert ist, so kann der äußere Rahmenteil auch schwenkbar obenseitig angelenkt sein, um aufgestellt werden zu können, damit durch das geöffnete Fenster Frischluft in den Innenraum des Wohnwagens strömen und ein Luftaustausch erfolgen kann.

Das Betätigungsorgan kann aus dem innenseitigen Rahmen vorstehen. Es kann aber auch an der Innenseite des außenseitigen Rahmenteils vorgesehen sein, wenn dieser der Rahmen eines Aufstellfensters ist und die Abschattungsmittel integriert sind oder die Fensterscheibe sich im inneren zweiten Rahmenteil befindet. In diesem Fall empfiehlt es sich, das Betätigungsorgan oder -die Betätigungsorgane in Nuten vertieft zu führen, damit die beiden Rahmenteile ungehindert aufeinandergelegt werden können. Bei leicht aufgestelltem Rahmenteil kann durch die Rahmenöffnung das Betätigungsorgan bedient werden. Wird das Rahmenteil dann wieder zurückgeschwenkt und verriegelt, können die Betätigungsorgane nicht bedient werden. Um immer eine Bedienung zu ermöglichen, sind die Abschattungsmittel an dem innenseitigen Rahmen vorzusehen, um jederzeit diese in gewünschte Positionen verschieben zu können. Die Betätigungsorgane können dabei frontseitig vorstehen oder in Nuten gelagert sein. Sie können aber auch untenseitig oder seitlich vorstehend in Führungsschlitzen gelagert sein. Auch hier bieten sich dem Fachmann verschiedenste Lösungsmöglichkeiten, die den gegebenen Räumlichkeitsansprüchen gerecht werden.

In dem Rahmenteil, beispielsweise in dem zweiten Rahmenteil, das an der Innenseite eines Wohnwagens befestigt ist und die Abschattungsmittel aufweist, kann zusätzlich eine Verrieglungsvorrichtung mit vorgesehen sein, wie sie in der älteren Gebrauchsmusteranmeldung DE 20 2005 005 494 der Anmelderin beschrieben ist. Die Verschließteile für die verschwenkbaren Fenster, Fenstereinsätze, Lukenabdeckungen oder Türen, die rahmenlos oder mit einem Rahmen versehen an dem ersten Rahmenteil des Blendrahmens angelenkt oder von diesem abnehmbar sind, können im geschlossenen Zustand über den zweiten Rahmenteil, der mit entsprechenden Verriegelungseinrichtungen versehen ist, zugleich verriegelt werden. Zu diesem Zweck ist in dem zweiten Rahmenteil umlaufend ein Endlosseil ebenfalls in Führungskanälen gelagert. Anstelle eines solchen Seils kann auch ein Band oder eine Kette verwendet werden. An dem Seil, Band oder der Kette ist mindestens ein Schieber mit mindestens einem Sicherungsteil befestigt, der in eine an dem verschwenkbaren Rahmenteil in einem Ansatz vorgesehene seitliche Verriegelungsausnehmung, die in dem Führungskanal des Seilzuges vorsteht, einschiebbar ist und so die Verriegelung herstellt. An dem Sicherungsteil, der fest an dem Seil oder dem Band oder der Kette befestigt ist, können weitere Verriegelungsstifte, -haken oder andere -elemente vorgesehen sein, die darüber hinaus beispielsweise eine in dem ersten Rahmen eines Fensters zusätzlich eingesetzte verschwenkbare Scheibe arretieren können. Bei einer solchen Ausführung kann beispielsweise ein rahmenloses oder umrahmtes Fenster über ein Rastscharnier an dem ersten Rahmenteil schwenkbeweglich befestigt sein, wie es in der älteren Gebrauchsmusteranmeldung der Anmelderin, DE 20 2005 010 734 U1, beschrieben ist. Es ist ersichtlich, dass bei einer solchen Fensteranordnung nach dem Entriegeln das eigentliche Fenster mit der Fensterscheibe aufklappbar ist, während die weitere innenseitig vorgesetzte verschwenkbare Scheibe, die beispielsweise eine gelochte Acrylglasscheibe sein kann und Insekten vom Einfliegen in den Wohnwagen abhält und dennoch eine gute Durchsicht bietet, durch den in einen Verriegelungsschlitz an der Scheibe greifenden Verriegelungselement, z. B. ein Stift, an dem Schieber, gegen unbeabsichtigtes Verschwenken gesichert ist und im Bedarfsfall nach dem Entriegeln aufgeklappt werden kann. Die Betätigung ist dabei über einen einzigen Seilzug für beide Fensterteile möglich; es können aber auch getrennte Seilzüge vorgesehen sein. Auch solche Führungen können in dem zweiten Rahmen, der sich an der Innenseite der Wand des Wohnwagens befindet, mit eingebracht sein. Damit ist es möglich, über zwei oder drei Schieber verschiedene Funktionen über entsprechende Seilzüge zu steuern, die in dem Rahmen unzugänglich geführt sind.

Der Vorteil der Erfindung ist offensichtlich. Die Rahmenteile können völlig unabhängig voneinander vormontiert erst beim Einbau in eine Wand zusammengesetzt werden. Die hier angegebene Möglichkeit der Verwendung in einem Wohnwagen ist nur beispielhaft zu sehen. Das Prinzip, das zur Anwendung kommt, kann bei allen Fenstertypen, egal ob in einer Hauswand oder in einem Dach als Dachfenster eingebaut, zur Anwendung kommen. Die beiden Rahmenteile sind lediglich am Montageort zusammenzuführen, nachdem eines der Teile an der Wand befestigt ist. Es sind dann alle Funktionen vollziehbar, ohne dass die Abschattungsmittel oder Lagerungen, Führungen, usw. nachträglich anmontiert werden müssen.

Die Erfindung wird nachfolgend anhand der in den Zeichnungen dargestellten Ausführungsbeispiele ergänzend erläutert.

In den Zeichnungen zeigen:
- FIG 1: einen Blendrahmen mit einem ersten Rahmenteil, der außenseitig an einer Wand befestigt ist, in welchem Abschattungsmittel angeordnet sind, und der innenseitig ein aufklappbares Fenster aufweist,
- FIG 2: einen Blendrahmen nach der Erfindung mit einem ersten Rahmenteil, der außenseitig in einen Wanddurchbruch eingesetzt und an der Wand befestigt ist und innenseitig einen zweiten Rahmenteil aufweist, in welchem die Abschattungsmittel angeordnet sind, und mit einem an dem äußeren Rahmen angebrachten Aufstellfenster,
- FIG 3: eine Variante mit einem innenseitig eingesetzten und an einer Wand befestigten Rahmenteil mit Abschattungsmitteln und einem hieran schwenkbeweglich angeordneten ersten Rahmenteil mit einem Fenster,
- FIG 4: in schematischer Darstellung einen zweiten Rahmenteil, der innenseitig aufgesetzt ist, wie er beispielsweise in Figuren 2 und 3 dargestellt ist,
- FIG 5: den Rahmen gemäß Figur 4 in der Draufsicht,
- FIG 6: den Rahmen gemäß Figur 4 in der Seitenansicht,
- FIG 7: den Rahmen gemäß Figur 4 in der perspektivischen Darstellung,
- FIG 8: die hervorgehoben gezeichnete Lageeinrichtung für ein Rollo,
- FIG 9: in perspektivischer Darstellung die Ansicht des Rahmens nach Figur 4 mit halb ausgezogenem Abschattungsmittel,
- FIG 10: ein Ausführungsbeispiel eines Wohnwagenfensters in schematischer Schnittzeichnung mit einem innenliegenden zweiten Rahmen und einem außenliegenden ersten Rahmen mit daran schwenkbar montiertem Fenster mit eigenem Rahmen,
- FIG 11: das in Figur 10 dargestellte Ausführungsbeispiel bei geöffnetem Fenster,
- FIG 12: ein weiteres Ausführungsbeispiel als Variante zu den Ausführungsbeispielen nach Figuren 10 und 11, ergänzt durch eine verschwenkbar im ersten Rahmenteil gelagerten gelochten Scheibe und
- FIG 13: das in Figur 12 dargestellte Ausführungsbeispiel bei geöffnetem Fenster.

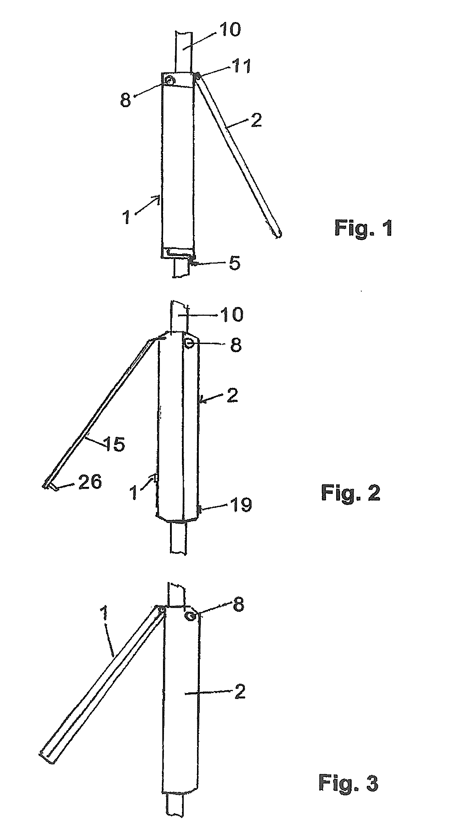

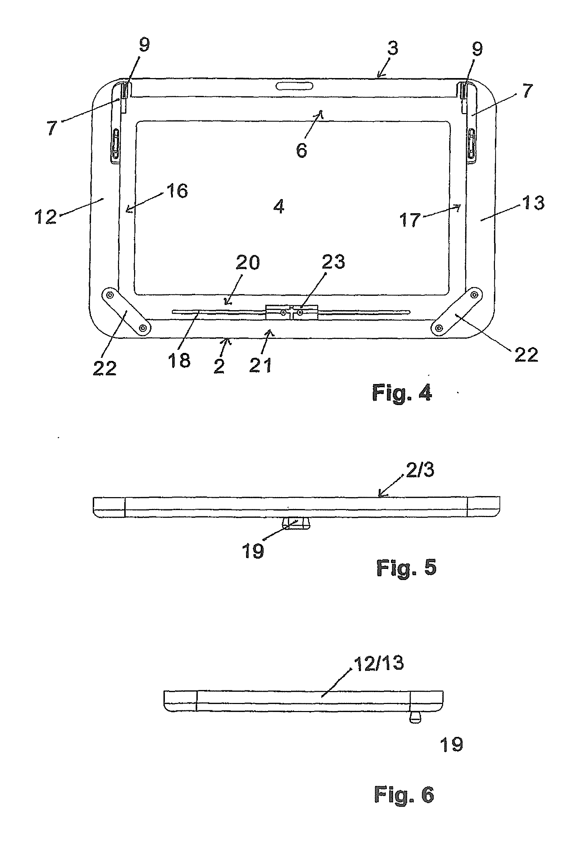

Das Ausführungsbeispiel in Figur 1 zeigt in schematischer Darstellung einen Blendenrahmen, der aus einem Rahmenteil 1 besteht, der außenseitig auf eine Wand 10, z. B. die Wand eines Wohnwagens, aufgesetzt und in den freigeschnittenen Durchbruch hineingeführt ist. Dieser Rahmenteil 1 weist mindestens obenseitig, durch den Kreis verdeutlicht, Abschattungsmittel 8 auf, die - wie später noch anhand der Figuren 4 ff. beschrieben wird - nach unten vorziehbar sind. Zur Betätigung ist ein Betätigungsorgan 5 vorgesehen, das an der Innenseite der Wand 10 aus dem ersten Rahmenteil 1 hervorsteht, und zwar nach unten, um stets bedient werden zu können. Es versteht sich dabei von selbst, dass entsprechende Führungsschlitze in dem unteren Rahmenholm einzubringen sind. An dem ersten Rahmenteil 1 ist obenseitig an der Innenseite der Wand 10 über eine Achse 11 schwenkbeweglich ein zweiter Rahmenteil 2 angelegt, in dem beispielsweise eine Fensterscheibe eingesetzt ist. Das Fenster kann also nach oben aufgeschwenkt werden, so dass Frischluft eintreten kann.

Soll nun beispielsweise eine Gaze als Abschattungsmittel vorgezogen werden, damit keine Insekten hineinfliegen können, so ist es lediglich erforderlich, das Betätigungsorgan 5 zu verschieben, um in gewünschter Weise die Gaze vor die Rahmenöffnung zu ziehen.

In Figur 2 ist eine Variante dargestellt, bei der ein erster Rahmenteil 1 außenseitig vorgesehen ist, der dazu bestimmt ist, ein Fenster mit einem eigenen Rahmen 15 zu tragen, der beispielsweise gemäß der Lehre der älteren Gebrauchsmusteranmeldung DE 20 2005 010 734 angelenkt ist. Dieser erste Rahmenteil wird fest in die Wand 10 eingebaut. Der zweite Rahmenteil 2 wird gemäß der Erfindung von der Innenseite her aufgesetzt. In diesem Rahmenteil 20 befinden sich nun die Abschattungsmittel 8.

Figur 3 zeigt wiederum eine Variante, bestehend aus einem ersten Rahmenteil 1, der einen Fensterflügel bildet und an einem zweiten Rahmenteil 2 des Blendrahmens obenseitig angelenkt ist. Dieser zweite Rahmenteil ist fest in der Wand 10, beispielsweise in der eines Wohnwagens, montiert, während der zweite Rahmenteil an diesem obenseitig angelenkt ist. In dem zweiten Rahmenteil 2 befinden sich die Abschattungsmittel 8, die durch den Kreis symbolisiert sind.

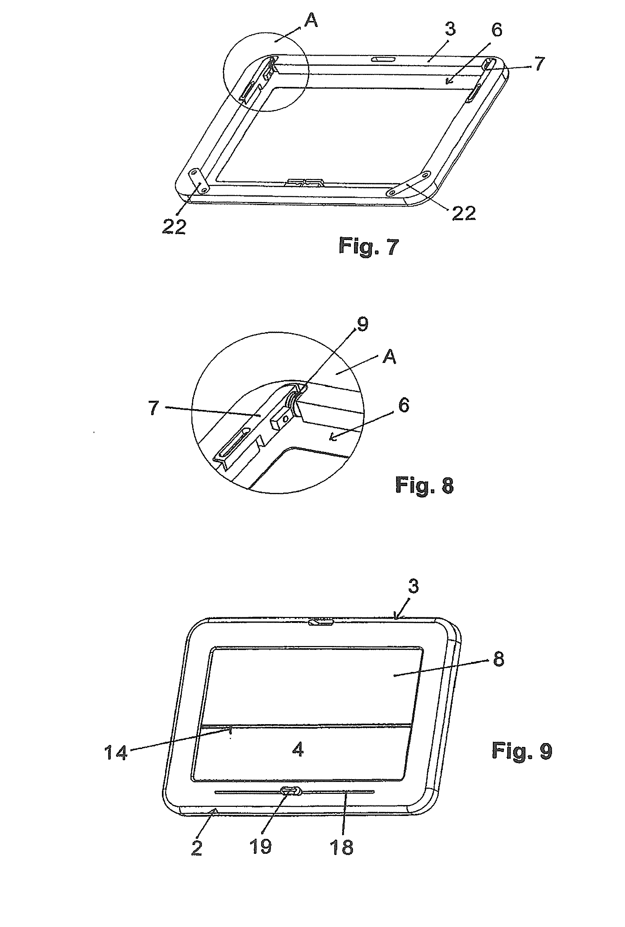

Die weiteren Figuren zeigen die Ausbildung eines zweiten Rahmenteils 2 mit Abschattungsmitteln in Form einer Rolloeinrichtung. Figur 4 zeigt die Rückansicht, also die normalerweise nicht sichtbare Draufsicht auf den zweiten Rahmenteil 2. Dieser weist in dem oberen Rahmenholm 3 in Form einer querverlaufenden Ausnehmung eine Lagerkammer 6 auf, in die beispielsweise ein Faltrollo einziehbar ist oder auch ein Rollo mit Wickelrolle einsetzbar ist. In die seitlichen Rahmenholmen 12 und 13 sind in Form von stufenförmigen Ausnehmungen Längsführungen 16 und 17 eingebracht. Des Weiteren befinden sich im Bereich der Lagerkammer 6 Lagereinrichtungen 7 mit Umlenkrollen 9 oder Umlenkrollen für einen Seilzug zur Betätigung der Antriebsmittel des angelenkten Abschattungsmittels 8, das nicht eingezeichnet, jedoch aus Figur 9 teilweise ersichtlich sind. Das nicht dargestellte Faltrollo ist an dem Rahmenholm 3 mit der einen Seite fixiert und weist in den einzelnen Faltungen seitliche Löcher auf, durch die in bekannter Weise das Seil eines Seilzuges hindurchgeführt ist. Der Auszugsanfang 14 weist seitlich Halteelemente auf, die fest an den seitlichen Seilsträngen befestigt sind, so dass beim Verschieben des Seils nach unten das Faltrollo automatisch ausgefahren wird. Anstelle eines solchen Faltrollos kann aber auch in die Lagerkammer 3 eine Wickelrolle für eine Rollobahn eingesetzt sein. In diesem Fall erübrigt sich ein gesondertes Antriebsmittel oder die Umlenkrolle 9. Diese kann dann Bestandteil des Rollos selbst sein.

Die Betätigung erfolgt über einen Endlosseilzug, der nicht dargestellt und in bekannter Weise über Umlenkrollen an den eingesetzten Halteelementen 22 herumgeführt ist. Die Führung des Seilzuges muss dabei so erfolgen, dass die den Transport bewirkenden Seilzugabschnitte in gleicher Richtung bewegt werden, wenn auf das Seil der im unteren Querholm 21 eingesetzte Mitnahmeschieber 23 wirkt, an dem das Betätigungsorgan 19 befestigt ist, das innerhalb des Längsschlitzes 18 seitlich verschiebbar geführt ist. Durch Verschieben des Mitnahmeschiebers 23, an dem der untere Querseilabschnitt des Seilzuges befestigt ist, wird automatisch bewirkt, dass das Rollo in eine Verschließstellung der Rahmenöffnung 4 verbracht wird, wie dies aus Figur 9 ersichtlich ist. Das Abschattungsmittel wird umgekehrt durch entgegengerichtetes Verschieben des Betätigungsorgans 19 wieder in die Lagerkammer 6 zurückgeschoben.

Figur 5 verdeutlicht den relativ schmalen Aufbau, Figur 6 darüber hinaus, dass das Betätigungsorgan 19 auch seitlich angebracht sein kann.

Aus der perspektivischen Darstellung in Figur 7 und dem Vergrößerungsausschnitt in Fig. 8 ist ersichtlich, dass die Antriebsmittel bzw. die Umlenkrolle 9 in der vergrößerten Lagerkammer, die aus der stufenförmigen Ausformung gebildet ist, an der seitlichen Lagereinrichtung 7 drehbar gelagert sind. Diese kann in den Rahmen eingesetzt werden. Während der Rahmen selbst aus Kunststoff bestehen kann, kann die Lagereinrichtung 7 beispielsweise aus Metall bestehen, desgleichen die Halteelemente 22. Aber auch diese sind aus Kunststoff herstellbar. Der Mitnahmeschieber 23 kann als Metallteil ausgeführt und durch Klemmtechnik an dem Seil befestigt sein.

Figur 9 zeigt in einer Draufsicht einen solchen zweiten Rahmenteil, wie er beispielsweise in Figur 2 dargestellt ist. In dieser Figur ist das Abschattungsmittel 8, beispielsweise eine Verdunklungsbahn eines, Rollos halb herausgezogen eingezeichnet. Zu diesem Zweck sind an dem Auszugsanfang 14 seitlich Halteelemente angebracht, die mit den beiden seitlichen Seilen des Seilzuges in Verbindung stehen. Der längliche Schlitz 18 führt das Betätigungsorgan 19. Der Schlitz kann beispielsweise von einem innenseitig angebrachten Borstenband verdeckt sein, das dennoch das Durchschieben des Betätigungsorgans mit dem daran befindlichen Mitnahmeschieber 23 zulässt.

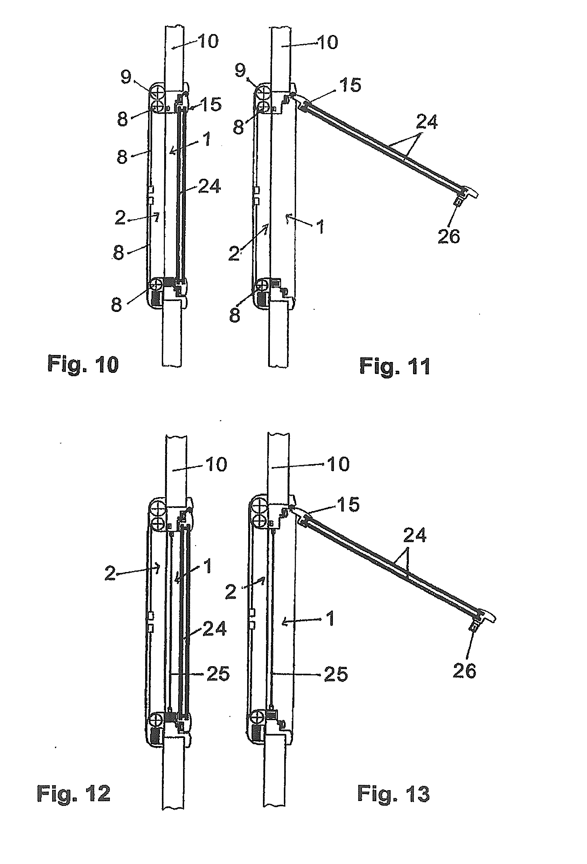

In den Figuren 10 und 11 ist in einer schematischen Schnittzeichnung ein Ausführungsbeispiel eines Blendrahmens für ein Fenster für einen Wohnwagen dargestellt. Der Blendrahmen besteht aus einem ersten Rahmenteil 1 und einem zweiten Rahmenteil 2. Der erste Rahmenteil 1 ist in den Wanddurchbruch der Wand 10 eingesetzt und darin befestigt. Der zweite Rahmenteil 2 ist rückseitig, also von der Innenseite des Wohnwagens, mit dem ersten Teil verklippt oder verschraubt. An dem ersten Rahmenteil 1 ist verschwenkbar ein Fenster 15 mit gesondertem Rahmen angelenkt. Für die Anlenkung kann z. B. ein Rastscharnier vorgesehen sein, wie es in der älteren Gebrauchsmusteranmeldung der Anmelderin, DE 20 2005 010 731 U1 beschrieben ist. Dieses Fenster 15 weist Acrylglasscheiben 24 auf bzw. eine Isolierverglasung und eine Öse 26 zum Verriegeln des Fensters in der Schließstellung. Der zweite Rahmenteil 2 weist zwei gegenläufig von oben nach unten und von unten nach oben vorziehbare Abschattungsmittel 8 auf, in vorliegender Form beispielsweise als Rollo. Der Antrieb ist über einen Seilzug sichergestellt, der über die Umlenkrolle 9 umgelenkt ist. Die beiden Rollos können so ausgebildet sein, dass sie in der Mitte zusammenstoßen. Es können aber auch unterschiedliche Materialien, wie beispielsweise eine Verdunklungsbahn oder eine aufgewickelte Gaze, vorgesehen sein. Im einen Fall dient die Bahn zur Verdunklung des Raumes in den Nachstunden oder zur Abschattung bei Sonneneinstrahlung, im anderen Fall dient das Vorziehen der Gaze dazu, Frischluft bei geöffnetem Fenster bei gleichzeitiger Verhinderung des Durchtritts von Insekten in den Innenraum durchzulassen.

In den Figuren 12 und 13 ist die gleiche Blendrahmenanordnung wie in den Figuren 10 und 11 dargestellt, ebenfalls ausgestattet mit einem Fenster 15 mit eigenem Rahmen. Insofern wird auf die Ausführungen zu Figuren 10 und 11 verwiesen. Zusätzlich weist der Blendrahmen 1 eine gelochte Scheibe, beispielsweise aus Acrylglas gefertigt, auf. In der dargestellten Position verhindert diese Scheibe, dass Insekten in den Innenraum einfliegen können. Die Abschattungsmittel sind in diesem Fall beispielsweise Verdunklungsrollos, deren Bahnen aus dunklem Material bestehen und kein Außenlicht durchdringen lassen. Die gelochte Scheibe 25 stellt sicher, dass ein Luftaustausch von der rechten Außenseite zur linken Innenseite des Wohnwagens möglich ist und umgekehrt. Um nun den freien Durchgriff durch die Rahmenöffnung zu ermöglichen, kann die zusätzliche gelochte Scheibe 25 auch um ein obenseitiges Gelenk nach außen verschwenkt werden. Die Scheibe kann auch, um sie beispielweise in der Nacht verriegeln zu können, mit gleichen Verriegelungsmitteln versehen sein wie das Fenster 15, also eine Verriegelungseinrichtung am unteren Ende aufweisen, in die ein Verriegelungsstift oder ein Verriegelungselement mit in Wirkverbindung gebracht werden kann, das an dem Schieber befestigt ist, an dem zugleich der Verriegelungsansatz zur Verriegelung des geschlossenen Fensters 26 angebracht ist. Die gelochte Scheibe kann einseitig gelocht sein, d. h. oben, während unten keine Lochung vorgesehen und ein freier Blick möglich ist, was beispielsweise bei Anbringung des Fensters im Küchenbereich von Vorteil ist. Die Scheibe 25 kann aber auch getönt sein. Hier eröffnen sich dem Fachmann ebenfalls mannigfaltige Möglichkeiten. Die Bedienung ist außerordentlich einfach. So kann durch Verschieben des Betätigungselementes für den Seilzug der Verriegelung bei geöffnetem Fenster 15 auch die zusätzliche Scheibe 25 verriegelt sein.

### Bezugszeichenliste

- 1: erster Rahmenteil
- 2: zweiter Rahmenteil
- 3: Rahmenholm
- 4: Rahmenöffnung
- 5: Betätigungsorgan
- 6: Lagerkammer
- 7: seitliche Lagereinrichtung
- 8: Abschattungsmittel
- 9: Umlenkmittel
- 10: Wand
- 11: Achse
- 12: Rahmenholm (seitlicher)
- 13: Rahmenholm (seitlicher)
- 14: Auszugsanfang
- 15: Fenster mit eigenem Rahmen
- 16: Längsführung
- 17: Längsführung
- 18: Längsschlitz
- 19: Betätigungsorgan
- 20: Brückenkanal
- 21: Rahmenholm
- 22: Halteebene
- 23: Mitnahmeschieber
- 24: Scheibe
- 25: gelochte Scheibe
- 26: Öse

## Patentansprüche

1. Blendrahmen für Fenster, Luken oder Türen mit Lichtdurchdringungsflächen, die rahmenlos oder mit einem Rahmen versehen an dem Blendrahmen angelenkt sind und über die Lichtdurchdringungsfläche verbringbare Abschattungsmittel aufweisen, **dadurch gekennzeichnet, dass** der Blendrahmen aus einem ersten Rahmenteil (1), der den Durchbruch in einer Wand (10) umrahmt oder in diesen eingesetzt ist, und aus einem zweiten Rahmenteil (2) besteht, der mit dem ersten Rahmenteil (1) verbindbar ist, dass mindestens in einem der Rahmenteile (1 oder 2), an der dem anderen Rahmenteil (1 oder 2) zugewandten Seite in mindestens einem der Rahmenholme (3) mindestens über die gesamte Breite oder Höhe der Rahmenöffnung (4) verlaufend, eine Austrittsöffnung und eine Lagerkammer (6) mit seitlichen Lagereinrichtungen (7) zur Aufnahme und Lagerung eines vorziehbaren Abschattungsmittels (8) oder zur Aufnahme eines Lagerteils mit eingesetztem Abschattungsmittel (8) und den hierfür vorgesehenen Antriebsmitteln vorgesehen ist, wobei mindestens ein Rahmenteil (1 oder 2) fest an der Wand (10) montiert ist und der andere Rahmenteil (1 oder 2) hieran anliegend oder um eine horizontale oder vertikale Achse (11) verschwenkbar befestigt ist, und
dass die sich im rechten Winkel von dem Rahmenholm (3) mit der Lagerungskammer (6) erstreckenden Rahmenholme (12, 13) mindestens Längsführungen (16, 17) mindestens für seitliche Halteelemente an dem Auszugsanfang (14) des Abschattungsmittels (8) aufweisen.

2. Blendrahmen nach Anspruch 1, **dadurch gekennzeichnet, dass** einer der beiden Rahmenteile (2) zugleich Rahmen des verschwenkbaren Fensters, der Luke oder der Tür ist und die Lichtdurchdringungsfläche umrahmt, und dass der andere Rahmenteil (1) fest an der Wand mit dem Durchbruch befestigt ist.

3. Blendrahmen nach Anspruch 1 oder 2, **dadurch gekennzeichnet, dass** die Lichtdurchdringungsfläche aus mindestens einer eingesetzten Kunststoff- oder Glasscheibe (24) gebildet ist und dass diese in einem eigenen Rahmen (15) eingesetzt ist, der außenseitig am ersten Rahmenteil (1) oder innenseitig am zweiten Rahmenteil (2) schwenkbar befestigt ist oder direkt in dem ersten Rahmenteil (1) oder in dem zweiten Rahmenteil (2) eingesetzt ist, dass das mindestens eine Abschattungsmittel (8)
a) in dem Rahmenteil (1, 2) vorgesehen ist, in dem sich die Scheibe befindet oder an dem der Rahmen mit Scheibe schwenkbar montiert ist oder
b) in dem Rahmenteil (1, 2), in dem sich die Scheibe nicht befindet oder der Rahmen mit Scheibe nicht montiert ist, und
dass im Falle a) die Längsführungen (16, 17) außenseitig im ersten Rahmenteil (1) vor der Scheibe oder bei Ausführung nach b) im zweiten Rahmenteil (2) hinter der Scheibe vorgesehen sind.

4. Blendrahmen nach Anspruch 1, **dadurch gekennzeichnet, dass** die Längsführungen (16, 17), Nuten oder Kanäle sind, die aus Rippen in dem zweiten Teil (2) und/oder dem ersten Teil (1) gebildet sind und dass die Längsführungen (16, 17) jeweils spiegelbildlich in den Rahmenholmen (12, 13) vorgesehen sind.

5. Blendrahmen nach Anspruch 4, **dadurch gekennzeichnet, dass** die Längsführungen (16, 17) Führungskanäle für Seilzugeinrichtungen oder parallel zu den Längsführungen Führungskanäle vorgesehen sind, in denen mindestens eine Seilzugeinrichtung gelagert ist, und dass Längsschlitze (18) in demselben Rahmenteil (2) an einer zugänglichen Stelle vorgesehen sind, die in den Führungskanälen (16, 17) oder in einem Abschnitt derselben münden, durch welche Längsschlitze (18) ein Mitnehmer eines Betätigungsorgans (19) hindurch gesteckt und mit dem Seilzug verbunden ist, mit welchem das Abschattungsmittel (8) aus der Verstauposition in eine Abdeckposition vorzieh- und rückschiebbar ist.

6. Blendrahmen nach Anspruch 5, **dadurch gekennzeichnet, dass** die Führungskanäle (16, 17) durch einen Brückenkanal (20) in dem Rahmenholm (21), der dem Rahmenholm (3) mit der Lagerungskammer gegenüberliegt, miteinander verbunden sind, dass als Seilzug ein endloses Seil, ein Band oder eine Kette in den Führungskanälen und dem Brückenkanal (20) verlegt ist, das mit der Antriebseinrichtung der Abschattungsmittel (8) in Wirkverbindung steht, dass an den Übergängen der Führungskanäle (16, 17) zu dem Brückenkanal (20) Umlenkmittel oder Umlenkgleitflächen für das Seil, das Band oder die Kette vorgesehen sind.

7. Blendrahmen nach Anspruch 4, **dadurch gekennzeichnet, dass** in den Längsführungen (16, 17) Einsetzrahmenteile mit Führungskanälen für einen Seilzug und Umlenkmittel (9) vorgesehen sind.

8. Blendrahmen nach Anspruch 1, **dadurch gekennzeichnet, dass** die Abschattungsmittel (8) Rolloeinrichtungen, Faltrollos, Jalousien oder Rollladen sind, die mit oder ohne Rückzugsantrieben versehen sind und in Wirkverbindung mit Seil-, Band- oder Kettenantrieben stehen.

9. Blendrahmen nach Anspruch 8, **dadurch gekennzeichnet, dass** die Rolloeinrichtung eine Rollobahn und eine Wickelrolle aufweist, die durch Federkraft in Aufwickelrichtung der Rollobahn vorgespannt ist.

10. Blendrahmen nach Anspruch 8 oder 9, **dadurch gekennzeichnet, dass** in den Eckenbereichen der Führungskanäle (16, 17) Umlenkrollen vorgesehen sind, die einen größeren Durchmesser aufweisen als die Antriebsrollen des Rollos oder des Rollladens oder andere Umlenkrollen (9) für das Seil, Band oder die Kette in dem Querholm (3), in dem sich das Faltrollo befindet.

11. Blendrahmen nach Anspruch 9 oder 10, **dadurch gekennzeichnet, dass** das Rollo ein gegen die Kraft einer auf die Achse wirkende Federanordnung abwickelbar ist und mit Lösen der Arretierung in der ausgezogenen Position automatisch oder kraftunterstützt zurückfährt und gleichzeitig das Betätigungselement (19) verschiebt.

12. Blendrahmen nach Anspruch 5, **dadurch gekennzeichnet, dass** der Längsschlitz (18) durch eine Borstenabdeckung verschlossen ist, wobei das Betätigungselement (19) in der überlappenden Borstenzone verschiebbar ist.

13. Blendrahmen nach Anspruch 1, **dadurch gekennzeichnet, dass** gegenüberliegend in parallel verlaufenden Rahmenholmen (3, 21) jeweils ein Abschattungsmittel (8) gelagert ist und dass die Abschattungsmittel (8) mittels eigener Antriebe oder durch eine mit einem Schieber in Verbindung bringbare Kupplung gemeinsam betätigbar sind, wobei der Endlosseilzug so umgelenkt und geführt ist, dass die beiden Abschattungsmittel (8) in entgegengesetzter Richtung bewegt werden.

14. Blendrahmen nach Anspruch 1, **dadurch gekennzeichnet, dass** der Rahmenteil (1 oder 2) mit dem eingesetzten Abschattungsmittel (8) und dem Antrieb hierfür eine autark vorgefertigte Einheit bildet und an dem anderen Rahmenteil (1, 2) mittels Rastmittel oder Schrauben oder Schwenkgelenk befestigbar ist.

15. Blendrahmen nach Anspruch 1, **dadurch gekennzeichnet, dass** in einem umlaufenden Führungskanal (16, 17, 20) Mittel für die Bedienung einer Verriegelungseinrichtung zum Verriegeln des an dem festmontierten Teil (1 oder 2) befindlichen verschwenkbaren Fensters, Lukenabdeckung, Fenstereinsatzes oder Tür vorgesehen ist.

16. Blendrahmen nach Anspruch 15, **dadurch gekennzeichnet, dass** das Mittel ein Endlosseil, ein Endlosband oder eine Endloskette ist und dass an diesen mindestens ein Schieber mit mindestens einem Sicherungsriegel befestigt ist, der mindestens einen Haken untergreift oder in mindestens eine Öse (26) einschiebbar ist, die bzw. der an dem relativ verschwenkbar angeordneten Rahmenteil (1 oder 2) oder an einem verschwenkbar an einem Rahmenteil (1, 2) gelagerten Fenster (15) vorgesehenen ist und das Fenster (15) an einem Rahmenteil (1, 2) oder den Rahmenteil (1 oder 2) gegen unbeabsichtigtes Aufschwenken am anderen sichert.

17. Blendrahmen nach Anspruch 15, **dadurch gekennzeichnet, dass** der umlaufende Führungskanal zugleich der Führungskanal für das Seil, Band oder die Kette für den Antrieb des oder der Abschattungsmittel (8) ist.

18. Blendrahmen nach Anspruch 16, **dadurch gekennzeichnet, dass** zusätzlich zur eingesetzten Scheibe (24) verschwenkbar im ersten oder zweiten Rahmenteil (1, 2) mindestens eine partiell gelochte verschwenkbar gelagerte Scheibe (25) angeordnet ist und dass diese an dem von der Schwenkachse entfernten Randbereich Mittel für die Aufnahme mindestens eines Arretierungselementes aufweist, das mit dem Betätigungselement (19) oder dem Band, dem Seil oder der Kette für die Verriegelung des Fensters (15) oder des verschwenkbaren Rahmenteils (1 oder 2) verbunden ist und zur Verriegelung durch eine Seitenausnehmung in dem Mittel beim Verschwenken der Scheibe (25) einrastet und durch Verschieben in den Führungskanal eingreift.

19. Blendrahmen nach Anspruch 1, **dadurch gekennzeichnet, dass** die Rahmenteile (1, 2) aus Kunststoff bestehen.
